# EUROPÄISCHE PATENTSCHRIFT

(11) **EP 3 077 255 B1**
(45) Veröffentlichungstag und Bekanntmachung des Hinweises auf die Patenterteilung: **13.02.2019**
(21) Anmeldenummer: 14730420.8
(22) Anmeldetag: 05.05.2014
(51) Int. Cl.: B60S 1/08

(54) **BELEUCHTUNG ZUR DETEKTION VON REGENTROPFEN AUF EINER SCHEIBE MITTELS EINER KAMERA**
ILLUMINATION FOR DETECTING RAINDROPS ON A PANE BY MEANS OF A CAMERA
ÉCLAIRAGE DESTINÉ À DÉTECTER DES GOUTTES DE PLUIE SUR UNE VITRE AU MOYEN D'UNE CAMÉRA

(30) Priorität: 06.12.2013 DE 102013225155
(43) Veröffentlichungstag der Anmeldung: 12.10.2016
(73) Patentinhaber: Conti Temic Microelectronic GmbH, 90411 Nürnberg (DE)
(72) Erfinder: ASHRAFI, Mina, 89231 Neu-Ulm (DE); BIX, Stefan, 88255 Baindt (DE)
(86) Internationale Anmeldenummer: PCT/DE2014/200196
(87) Internationale Veröffentlichungsnummer: WO 2015/081934

(56) Entgegenhaltungen:
- WO-A1-2012/092911
- WO-A1-2014/108123
- JP-A- 2010 096 604
- JP-A- 2010 223 685
- US-A- 6 020 704
- US-B2- 7 259 367

## Beschreibung

Die Erfindung betrifft eine Vorrichtung zur Erkennung von Regen auf einer Scheibe mittels einer Beleuchtungsquelle und einer Kamera.

In der US 7,259,367 B2 wird mittels einer Kamera eine Regensensierung vorgeschlagen, die eine großflächige Beleuchtung des Durchtrittsfensters des Kameraöffnungswinkels mit der Scheibe durch eine Infrarotdiode vorsieht. Die Kamera ist nahezu auf unendlich fokussiert und damit gleichzeitig für Fahrerassistenzapplikationen nutzbar. Wegen der Abbildung auf den Fernbereich sind Regentropfen nur als Störungen im Bild bemerkbar, die durch aufwendige Differenzmessungen der mit in Synchronisation des Pixeltaktes gepulsten oder modulierten Infrarotlichtes aufgenommen Bildern detektiert werden.

In der WO 2012/092911 A1 werden eine Vorrichtung und ein Verfahren zur Erkennung von Regen beschrieben. Eine Kamera ist hinter einer Scheibe angeordnet, insbesondere im Inneren eines Fahrzeugs hinter einer Windschutzscheibe, und auf einen Fernbereich fokussiert, der vor der Scheibe liegt. Eine Beleuchtungsquelle zur Erzeugung mindestens eines auf die Scheibe gerichteten Lichtstrahls richtet den mindestens einen Lichtstrahl derart auf die Scheibe, dass mindestens ein von der Außenseite der Scheibe reflektierter Strahl als äußerer Lichtreflex bzw. Außenreflex auf die Kamera auftrifft. Die Lichtmenge des mindestens einen auf die Kamera auftreffenden Strahls bzw. Lichtreflexes kann von der Kamera gemessen werden kann. Als Beleuchtungsquelle sind eine oder mehrere Leuchtdioden optional mit einem Lichtleiter oder ein Lichtband angegeben. Wenn der Öffnungswinkel der Beleuchtung groß genug ist, kann die Beleuchtungsquelle auch innerhalb der Kamera, z.B. auf einer Platine des Kameraaufbaus platziert werden.

Aus der Druckschrift JP 2010223685 A ist eine Vorrichtung mit einer Kamera für Fahrzeuge zur Detektion von Regentropfen bekannt, wobei ein erster aufgenommener Abbildungsbereich der Kamera ein regentropfenbestimmender Bereich und ein zweiter aufgenommener Abbildungsbereich der Kamera ein kontrastbestimmender Bereich ist.

Die Druckschrift WO 2014/108123 A1 betrifft eine Vorrichtung zur Erkennung von Regen. Die Vorrichtung umfasst eine Kamera und eine Beleuchtungsquelle zur Emission von sichtbarem Licht auf eine Scheibe. Die Kamera und die Beleuchtungsquelle sind derart ausgebildet und angeordnet, dass die Kamera ein Signal vom sichtbaren Licht erfassen kann, das die Beleuchtungsquelle auf die Scheibe emittiert. Das sichtbare Licht durchquert eine Blendenvorrichtung, die bewirkt, dass das Licht in einer vorgegebenen Richtung senkrecht zur Beleuchtungsrichtung von Strukturen der Blendenvorrichtung abgeblockt oder stark abgeschwächt wird.

Die Druckschrift JP 2010 096604 A offenbart eine gattungsgemäße Vorrichtung zum Erfassen eines Objekts auf der Windschutzscheibe, welches die Sicht beeinträchtigt. Bei diesem Objekt kann es sich um einen Regentropfen handeln, welcher sich an einer Außenseite der Windschutzscheibe befindet. Zur Detektion dieses Regentropfens empfängt eine Steuerschaltung ein Reflexionslicht der äußeren Oberfläche der Windschutzscheibe und ein Reflexionslicht der inneren Oberfläche der Windschutzscheibe. Die Empfindlichkeit der Regenerkennung hängt hierbei wesentlich von der Ausgestaltung der Beleuchtung ab.

Aufgabe der vorliegenden Erfindung ist es, eine optimierte Beleuchtung für eine kamerabasierte Regenerkennung anzugeben, die eine hohe Empfindlichkeit gewährleistet.

Die Erfindung basiert auf den folgenden Grundüberlegungen: Die Empfindlichkeit der Regenerkennung hängt von der Beleuchtungsintensität und der Fläche des Detektionsbereichs auf der Windschutzscheibe ab. Mit LEDs als Beleuchtungsquelle wird ein Bereich abgedeckt, der dem an der Windschutzscheibe gespiegelten Bild der LEDs entspricht. Dieser abgedeckte Bereich reicht häufig nicht für eine effiziente Regenerkennung aus. Die Verwendung eines Lichtleiters geht zudem mit einem Verlust der von der Beleuchtungsquelle emittierten Lichtintensität einher.

Eine erfindungsgemäße Vorrichtung zur Erkennung von Regen auf einer Scheibe umfasst eine Kamera, eine Beleuchtungsquelle zur Emission von Licht und ein Diffusionselement. Aus dem Diffusionselement tritt von der Beleuchtungsquelle emittiertes Licht als Lichtfläche aus. Die Kamera, die Beleuchtungsquelle und das Diffusionselement sind derart ausgebildet und angeordnet, dass die Kamera ein Signal vom Licht bzw. eine Abbildung der Lichtfläche erfassen kann, das die Beleuchtungsquelle emittiert, durch das Diffusionselement auf die Scheibe trifft und von der Scheibe reflektiert wird. Insbesondere korreliert dabei das von der Kamera detektierte Signal bzw. die Lichtfläche(n) mit an der Scheibeninnen- bzw. - außenseite und/oder am Regentropfen reflektierten bzw. gestreuten Licht der Beleuchtungsquelle.

Das Diffusionselement kann auch als Diffusor bezeichnet werden und kann insbesondere ein Diffusionsfilter, oder eine Diffusionsschicht sein. Das von der Beleuchtungsquelle, z.B. einer Reihe von Leuchtdioden emittierte Licht wird vorteilhaft von dem Diffusionselement zerstreut, was zu einer gleichmäßig beleuchteten Austrittsfläche des Diffusionselements führt, also zur Ausbildung einer Lichtfläche.

Diffusionselemente gibt es in unterschiedlichen Dichten und mit unterschiedlichen Zerstreuungswinkeln (Winkel, unter dem die Intensität die Hälfte der Maximalintensität, gestreut wird). Diffusionselemente mit höherer Dichte (an diffusiven/zerstreuenden Bestandteilen) bewirken eine stärkere Zerstreuung, die mit einem höheren Verlust an transmittiertem Licht einhergeht. Durch die stärkere Zerstreuung wird ein größerer (Detektions-)Bereich der Scheibe beleuchtet. Der Zerstreuungswinkel von unterschiedlichen Diffusionselementen ist ebenfalls variabel. Ein größerer Winkel ermöglicht ebenfalls einen größeren Detektionsbereich schwächt jedoch die Lichtintensität.

Die Wahl eines geeigneten Diffusionselements erfordert i.d.R. einen vernünftigen Kompromiss aus Transmissionsverlusten, bzw. Intensitätsverminderung und der Größe des Detektionsbereichs. Vorteilhaft trägt die Ausbildung und Anordnung des Diffusionselements diesen Zusammenhängen Rechnung.

Die Kamera umfasst bevorzugt einen Bildsensor, z.B. einen CCD- oder CMOS-Sensor, und ein Objektiv bzw. Abbildungssystem zur Fokussierung von elektromagnetischer Strahlung aus einem oder mehreren Bereichen auf den Bildsensor.

Die Beleuchtungsquelle kann insbesondere als eine oder mehrere Leuchtdioden (LEDs) ausgebildet sein.

Zusammen mit dem Diffusionselement erzeugt die Beleuchtungsquelle eine gleichmäßige flächige Beleuchtung (Lichtfläche) eines Bereichs der Scheibe.

Bevorzugt wird Regen auf der Außenseite der Scheibe erkannt, indem die Kamera hinter der Scheibe angeordnet und auf einen Fernbereich vor der Scheibe fokussiert wird.

Die erfindungsgemäße Vorrichtung bietet den Vorteil, dass eine kostengünstige Beleuchtung verwendet wird, die eine robuste und zuverlässige Erkennung von Regen ermöglicht. Sowohl die Material- als auch die Fertigungskosten für eine erfindungsgemäße Vorrichtung sind gering gegenüber bekannten kamerabasierten Vorrichtungen mit vergleichbar vielseitigen Anwendungsgebieten und vergleichbarer Wirksamkeit bzw. Empfindlichkeit der Regendetektion.

Nach der Erfindung sind die Kamera, die Beleuchtungsquelle und das Diffusionselement derart ausgebildet und angeordnet, dass die Kamera ein erstes Spiegelbild der an der Innenseite der Scheibe reflektierten Lichtfläche und eine zweites Spiegelbild der an der Außenseite der Scheibe reflektierten Lichtfläche erfassen kann. Bei der Auslegung der Elemente der Vorrichtung sollten insbesondere Eigenschaften der Scheibe, wie z.B. Neigungswinkel, Brechungsindex und Dicke, berücksichtigt werden.

Bevorzugt sind dabei die Kamera, die Beleuchtungsquelle und das Diffusionselement derart ausgebildet und angeordnet, dass das erste und das zweite von der Kamera erfassbare Spiegelbild einander nicht überlappen, sie können dabei aneinander angrenzen. Das erste Spiegelbild ist unabhängig vom Vorliegen von Regentropfen im beleuchteten Bereich der Scheibe, während das zweite Spiegelbild sich bei vorliegenden Regentropfen im beleuchteten Bereich der Scheibe verändert bzw. abschwächt, da Teile der Lichtintensität durch die Regentropfen aus der Scheibe ausgekoppelt werden und nicht zur Kamera reflektiert werden. Gemäß einer vorteilhaften Ausführungsform wird die Lichtfläche durch eine an oder auf oder vor dem Diffusionselement gebildete Apertur begrenzt wird. Die Apertur kann mittels einer schwarzen bzw. nichtreflektierenden und undurchlässigen Begrenzung auf der Austrittsseite des Diffusionselements gebildet werden. Insbesondere kann die Apertur als Abdichtung zwischen dem Diffusionselement und einer Aufnahmevorrichtung für das Diffusionselement gebildet werden. Dadurch ist eine Begrenzung oder eine Anpassung der Lichtfläche möglich.

In einer bevorzugten Ausführungsform ist das Diffusionselement eine Diffusionsfolie. Diffusionsfolien sind in unterschiedlichster Ausgestaltung kostengünstig einsetzbar.

Vorteilhaft ist die Kamera mittels eines Objektivs auf einen Fernbereich fokussiert, so dass das oder die Spiegelbilder der Lichtfläche unscharf von der Kamera abgebildet wird oder werden. Dadurch kann die Kamera als Multifunktionssensor für eine oder mehrere weitere Fahrerassistenzfunktionen eingesetzt werden, die auf einer Auswertung des fokussiert abgebildeten Fernbereichs beruhen, wie z.B. eine Spurverlassenswarnung (LDW, Lane Departure Warning), eine Spurhalteunterstützung (LKA/LKS, Lane Keeping Assistance/System), eine Verkehrszeichenerkennung (TSR, Traffic Sign Recognition), eine automatische Fernlichtsteuerung (IHC, Intelligent Headlamp Control), eine Kollisionswarnung (FCW, Forward Collision Warning), eine automatische Längsregelung (ACC, Adaptive Cruise Control), eine Einparkunterstützung und automatische Notbrems- oder Notlenksysteme (EBA, Emergency Brake Assist oder ESA, Emergency Steering Assist).

Gemäß einer bevorzugten Ausführungsform ist die Beleuchtungsquelle in einem Gehäuse angeordnet und das Diffusionselement in einer Aussparung des Gehäuses. Das Gehäuse kann insbesondere aus Metall gefertigt sein. Die Apertur kann aus einer Abdichtung zwischen dem Diffusionselement und der Aussparung des Gehäuses gebildet werden.

Vorteilhaft ist die Beleuchtung auf einer Leiterplatte angeordnet, wobei die Leiterplatte Bestandteil oder Träger der Kameraelektronik ist. Die Leiterplatte kann zudem innerhalb des Gehäuses angeordnet sein.

Nach der Erfindung umfasst die Kamera einen Sichttrichter bzw. eine Sichtblende bzw. eine Streulichtblende, welche insbesondere das Sichtfeld der Kamera (nach unten) begrenzt und idealerweise Stör- und Streulichtreflexe minimiert. Das Diffusionselement ist am Sichttrichter angeordnet oder in den Sichttrichter integriert. Um eine kompakte Bauweise der Kamera mit integrierter Beleuchtung zu erzielen, kann die Beleuchtungsquelle bevorzugt unter dem Sichttrichter angeordnet sein. Hierzu kann vorteilhaft das Diffusionselement derart in den Sichttrichter integriert sein, dass es in diesem Bereich den Sichttrichter "ersetzt". Alternativ kann der Sichttrichter einen Bereich aus lichtdurchlässigem Material aufweisen und die Diffusionsfolie kann insbesondere darauf angeordnet sein.

Im Folgenden wird die Vorrichtung anhand von Figuren und Ausführungsbeispielen näher erläutert.

Es zeigen:
Fig. 1 schematisch das Grundprinzip einer möglichen Anordnung von Beleuchtungsquelle, Scheibe und Kamera zur Regenerkennung (im Längsschnitt) der Stand der Technik und
Fig. 2 eine Anordnung von einer Beleuchtungsquelle mit einer Diffusionsfolie, Scheibe und Kamera zur verbesserten Regenerkennung.

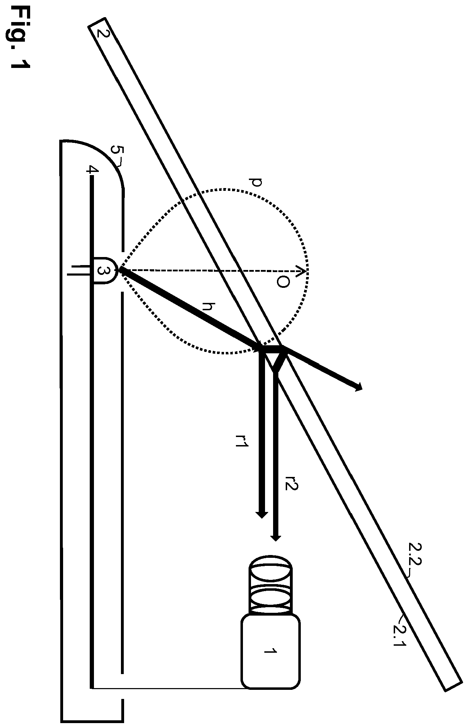

Fig. 1 zeigt im Längsschnitt eine auf den Fernbereich fokussierte Kamera mitsamt Objektiv (1) und eine Beleuchtungsquelle (3), die Licht (o, p, h) auf eine Windschutzscheibe (2) eines Fahrzeugs ausstrahlt, grundsätzlich vergleichbar mit einem Ausführungsbeispiel der WO 2012/092911 A1. Die LED-Beleuchtungsquelle (3) emittiert Licht in einer bestimmten Verteilung (p) hier mit einem Abstrahlwinkel bzw. einer Halbwertsbreite (FWHM) der Abstrahlwinkelverteilung von 120° und einer maximalen Intensität in der zentralen Abstrahlrichtung (o). Der Öffnungswinkel der Beleuchtung ist so groß, dass von einer Strahlrichtung (h) an der Innen- (2.1) und Außenseite (2.2) der Scheibe reflektierte Strahlen als zwei räumlich getrennte Strahlen (r1, r2) auf das Objektiv bzw. die Kamera (1) auftreffen. Das meiste von der LED-Beleuchtungsquelle emittierte Licht (Richtung o) wird jedoch von der Windschutzscheibe (2) nicht zur Kamera (1) reflektiert und geht für die Regenerkennung verloren. Wegen der Fokussierung auf den Fernbereich wird die Umrandung der Strahlenbündel nur unscharf von der Kamera (1) abgebildet. Beide reflektierten Strahlen (r1, r2) sind ausreichend getrennt und ihre jeweiligen Lichtreflexe sind mit der Kamera (1) messbar.

Der an der Luft-Scheibe-Grenzfläche (bzw. Scheibeninnenseite (2.1)) reflektierte Anteil (r1) des Lichtstrahls (h) kann als Referenzstrahl dienen. Vom Anteil, der in die Scheibe transmittiert wird, dient der Anteil als Messstrahl (r2), der an der Scheibe-Luft/Regentropfen-Grenzfläche (bzw. Scheibenaußenseite (2.2)) reflektiert wird und auf die Kamera (1) trifft. Nicht dargestellt ist der Anteil des Strahls, der mehrfach innerhalb der Scheibe (2) reflektiert wird (an der Innenseite (2.1) Scheibe-Luft, nachdem er an der Außenseite (2.2) Scheibe-Regentropfen reflektiert wurde). Die dargestellten Strahlenverläufe (h, r1, r2) und Lichtverteilungen (o, p) sind schematisch.

Wenn bei Regen die Außenseite (2.2) der Windschutzscheibe (2) benetzt ist, wird ein Großteil des durch die Innenseite (2.1) in die Scheibe transmittierten Lichts ausgekoppelt, so dass der reflektierte Anteil (r2) schwächer ist als er es bei einer trockenen Scheibe ist (nicht dargestellt) . Der von der Innenseite (2.1) reflektierte Strahl (r1) ist von einer Benetzung der Scheibenaußenseite (2.2) unbeeinflusst.

Durch den Vergleich der gemessenen Lichtreflexe beider Strahlen (r1 zu r2) kann so leicht das im Regenfall verminderte Signal gemessen werden und ein Scheibenwischer entsprechend angesteuert werden.

Die Beleuchtungsquelle (3) umfasst vorzugsweise mehrere in einer Reihe angeordnete LEDs mit einem weiten Abstrahlwinkel, von denen in Fig. 1 nur eine dargestellt ist. Die weiteren LEDs können insbesondere senkrecht zu der in Fig. 1 dargestellten Ebene aufgereiht sein. Eine Mehrzahl von LEDs ist vorteilhaft, um eine für die Regenerkennung ausreichende Beleuchtung zu erzielen. Die LEDs sind insbesondere als nach oben abstrahlende SMD-Bauteile auf einer Leiterplatte (4) angeordnet sein. Die Leiterplatte (4) kann vorteilhaft eine PCB (printed circuit board) der Kameraelektronik sein, welche zum Schutz vor Schmutz, Feuchtigkeit und elektromagnetischen Störungen innerhalb eines Gehäuses (5) angeordnet ist. Die Verbindungslinie zwischen der Kamera (1) und der Leiterplatte (4) in Fig. 1 soll nur veranschaulichen, dass die Leiterplatte (5) Bestandteil der Kameraelektronik ist.

Der von den LEDs beleuchtete Bereich der Windschutzscheibe (2), der zur Regenerkennung genutzt werden kann, ist sehr klein, z.B. in der Größenordnung weniger mm². Nur in diesem (Detektions-)Bereich werden Regentropfen, die sich auf der Außenseite der Scheibe befinden von LEDs beleuchtet. Die Empfindlichkeit der Regenerkennung hängt von der Lichtintensität und der Größe des Detektionsbereichs auf der Windschutzscheibe ab. Mit LEDs als Beleuchtungsquelle (3) entspricht der Detektionsbereich dem Spiegelbild, welches durch Reflexion der LED-Emissionsoberflächen an der Scheibe entsteht. Die dadurch abgedeckte (Detektions-) Fläche ist nicht ausreichend für eine wirksame Regenerkennung.

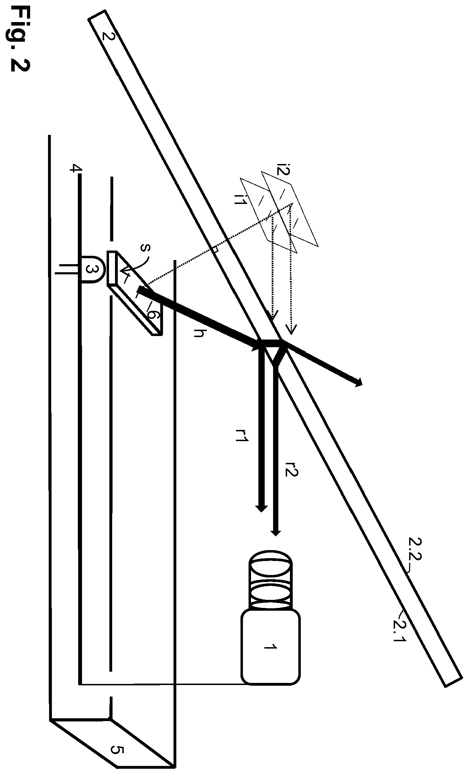

Fig. 2 zeigt eine Anordnung mit einem Diffusionselement (6), welches über der Beleuchtungsquelle (3) angeordnet ist. Die Beleuchtungsquelle (3) kann insbesondere wie im Zusammenhang mit Fig. 1 beschrieben eine Mehrzahl in einer Reihe angeordneter LEDs sein. Das Diffusionselement (6) kann ein Diffusionsfilter, eine Diffusionsfolie oder eine Diffusionsschicht sein. Das von der Beleuchtungsquelle (3) emittierte Licht wird von dem Diffusionselement (6) zerstreut, was zu einer gleichmäßig beleuchteten Austrittsfläche (s) des Diffusionselements (Lichtfläche) führt.

Diffusionsfolien sind in unterschiedlichen Dichten und Streuwinkeln (Winkel, unter dem die Intensität die Hälfte der Maximalintensität, gestreut wird) . Diffusionsfolien mit höherer Dichte (an diffusiven/zerstreuenden Bestandteilen) bewirken eine stärkere Zerstreuung, die mit einem höheren Verlust an transmittiertem Licht einhergeht. Durch die stärkere Zerstreuung wird ein größerer (Detektions-) Bereich der Windschutzscheibe (2) beleuchtet. Der Streuwinkel von unterschiedlichen Diffusionselementen bzw. -folien ist ebenfalls variabel. Ein größerer Winkel ermöglicht ebenfalls einen größeren Detektionsbereich schwächt jedoch die Lichtintensität.

Zur Wahl eines geeigneten Diffusionselements (6) ist ein vernünftiger Kompromiss aus Transmissionsverlusten, bzw. Intensitätsverminderung und der Größe des Detektionsbereichs zu finden. Die von der Kamera (1) detektierbare Intensität des Lichts von der Beleuchtungsquelle (3) muss dabei für eine wirksame Regenerkennung ausreichen.

Die Spiegel- bzw. virtuellen Bilder von der Lichtfläche (s) erzeugt von der Scheibeninnenseite (i1) bzw. -außenseite (i2) sind für die Kamera (1) sichtbar.

Abhängig von der Größe der beleuchteten Fläche (s), Beschaffenheit (Brechungsindex und Dicke) der Windschutzscheibe, den Winkeln zwischen der beleuchteten Fläche (s) und der Windschutzscheibe (2) sowie zwischen der Windschutzscheibe (2) und der optischen Achse der Kamera (1) kann es zu einer Überlappung von erstem (i1) und zweitem (i2) Spiegelbild im Kamerabild kommen. Dieser Überlappungsbereich kann nicht bzw. nur schwierig zur wirksamen Regenerkennung genutzt werden. Vorzugsweise sollte eine Überlappung von erstem (i1) und zweitem (i2) Spiegelbild im Kamerabild vermieden werden.

Eine mögliche Maßnahme zur Vermeidung dieser Überlappung stellt das Anbringen einer nichtreflektierenden und undurchlässigen Begrenzung auf der Austrittsseite des Diffusionselements (6) dar, um die beleuchtete Fläche (s) zu begrenzen. Nach der Integration des Diffusionselements (6) in eine Öffnung des (metallischen) Gehäuses (5) kann eine schwarze Abdichtung zur Abdeckung der Umgebung des Diffusionselements eingesetzt werden. Dadurch wird eine Apertur gebildet. Die schwarze Abdichtung verhindert ungewollte Streulichtemission gegenüber der Umgebung und ungewollten Streulichteintritt in das Diffusionselement (6) aus der Umgebung desselben.

Um die Vorrichtung für verschiedene Fahrzeuge mit verschiedenen Neigungswinkeln der Windschutzscheibe (2) anzupassen, kann das Diffusionselement (6) in einem vorgegebenen festen Winkel und optional auch einem festen vorgegebenen Abstand zur jeweiligen Windschutzscheibe (2) angeordnet werden. Dazu kann insbesondere das Diffusionselement (6) mit einem entsprechenden Kippwinkel beaufschlagt angeordnet sein. Dadurch ist die Abdeckung bzw. Beleuchtung eines gleichartigen Detektionsbereichs auf der jeweiligen Windschutzscheibe (2) für unterschiedliche Windschutzscheibenneigungen in unterschiedlichen Fahrzeugtypen möglich.

### Bezugszeichenliste

- 1: Kamera
- 2: Windschutzscheibe
- 2.1: Innenseite der Windschutzscheibe
- 2.2: Außenseite der Windschutzscheibe
- 3: Beleuchtungsquelle
- 4: Leiterplatte
- 5: Gehäuse
- 6: Diffusionsfolie
- p: Verteilung des von der Beleuchtungsquelle emittierten Lichts
- o: Emissionsrichtung mit der maximalen Intensität der Beleuchtungsquelle
- h: Beleuchtungsstrahlrichtung, die von der Kamera erfasst wird
- r1: Anteil von h, der an der Scheibeninnenseite reflektiert und von der Kamera erfasst wird
- r2: Anteil von h, der an der Scheibenaußenseite reflektiert wird und von der Kamera erfasst wird
- s: Lichtfläche bzw. illuminierte Oberfläche der Diffusionsfolie
- i1: Spiegelbild der an der Scheibeninnenseite reflektierten Lichtfläche
- i2: Spiegelbild der an der Scheibenaußenseite reflektierten Lichtfläche

## Patentansprüche

1. Vorrichtung zur Erkennung von Regen auf einer Scheibe (2) umfassend
- eine Kamera (1),
- eine Beleuchtungsquelle (3) zur Emission von Licht (h, o, p),
- ein Diffusionselement (6), aus welchem das von der Beleuchtungsquelle emittierte Licht als Lichtfläche (s) austritt, und
- wobei die Kamera (1), die Beleuchtungsquelle (3) und das Diffusionselement (6) derart ausgebildet und angeordnet sind, dass die Kamera ein Signal vom Licht (r1, r2) erfassen kann, das die Beleuchtungsquelle emittiert, durch das Diffusionselement auf die Scheibe (2) trifft und von der Scheibe reflektiert wird,
wobei
die Kamera (1) ein erstes Spiegelbild der an der Innenseite der Scheibe (2.1) reflektierten Lichtfläche (s) und eine zweites Spiegelbild (i2) der an der Außenseite der Scheibe (2.2) reflektierten Lichtfläche (s) erfassen kann,
**dadurch gekennzeichnet, dass**
die Kamera (1) einen Sichttrichter umfasst und das Diffusionselement (6) am Sichttrichter angeordnet oder in den Sichttrichter integriert ist..

2. Vorrichtung nach Anspruch 1, wobei das erste (i1) und das zweite von der Kamera (1) erfassbare Spiegelbild (i2) einander nicht überlappen.

3. Vorrichtung nach Anspruch 1 oder 2, wobei die Lichtfläche (s) durch eine an oder auf oder vor dem Diffusionselement angebrachte Apertur begrenzt wird.

4. Vorrichtung nach einem der vorhergehenden Ansprüche, wobei das Diffusionselement (6) eine Diffusionsfolie ist.

5. Vorrichtung nach einem der vorhergehenden Ansprüche, wobei die Kamera (1) mittels eines Objektivs auf einen Fernbereich fokussiert ist, so dass das oder die Spiegelbilder (i1, i2) der Lichtfläche (s) unscharf von der Kamera (1) abgebildet werden.

6. Vorrichtung nach einem der vorhergehenden Ansprüche, wobei die Beleuchtungsquelle (3) in einem Gehäuse (5) angeordnet ist und das Diffusionselement (6) in einer Aussparung des Gehäuses angeordnet ist.

## Claims

1. A device for detecting rain on a pane (2) comprising
- a camera (1),
- an illumination source (3) for emitting light (h, o, p),
- a diffusion element (6) from which the light emitted by the illumination source exits as light sheet (s), and
- wherein the camera (1), the illumination source (3) and the diffusion element (6) are formed and arranged such that the camera can detect a signal from the light (r1, r2) which is emitted by the illumination source, impinges on the pane (2) through the diffusion element and is reflected by the pane,
- wherein the camera (1) can detect a first mirror image of the light sheet (s) reflected at the inner side of the pane (2.1) and a second mirror image (i2) of the light sheet (s) reflected at the outer side of the pane (2.2),
- **characterized in that**
- the camera (1) comprises a view funnel, and the diffusion element (6) is arranged at the view funnel or is integrated in the view funnel.

2. The device according to Claim 1, wherein the first mirror image (i1) and the second mirror image (i2) detectable by the camera (1) do not overlap one another.

3. The device according to Claim 1 or 2 wherein the light sheet (s) is limited by an aperture which is arranged at or on or in front of the diffusion element.

4. The device according to any one of the preceding claims, wherein the diffusion element (6) is a diffusion film.

5. The device according to any one of the preceding claims, wherein the camera (1) is focused on a far range by means of an objective lens so that the mirror image or mirror images (i1, i2) of the light sheet (s) is or are imaged out of focus by the camera (1).

6. The device according to any one of the preceding claims, wherein the illumination source (3) is arranged in a housing (5) and the diffusion element (6) is arranged in a cutout of the housing.

## Revendications

1. Dispositif de détection de pluie sur une vitre (2), comprenant
- une caméra (1),
- une source d'éclairage (3) pour l'émission de lumière (h, o, p),
- un élément diffuseur (6), d'où sort la lumière émise par la source d'éclairage sous forme d'un feuillet lumineux (s), et
- la caméra (1), la source d'éclairage (3) et l'élément diffuseur (6) étant prévus et disposés de sorte que la caméra puisse capter un signal de la lumière (r1, r2) émise par la source d'éclairage, incident sur la vitre (2) par l'élément diffuseur et réfléchi par la vitre,
la caméra (1) pouvant capter une première image réfléchie du feuillet lumineux (s) réfléchie sur la face intérieure de la vitre (2.1), et une deuxième image réfléchie (i2) du feuillet lumineux (s) réfléchie sur la face extérieure de la vitre (2.2),
**caractérisé en ce que**
la caméra (1) comprend une trémie de visée et l'élément diffuseur (6) est disposé sur la trémie de visée ou est intégré à la trémie de visée.

2. Dispositif selon la revendication 1, la première (i1) et la deuxième (i2) images réfléchies pouvant être captées par la caméra (1) ne se chevauchant pas l'une l'autre.

3. Dispositif selon la revendication 1 ou la revendication 2, le feuillet lumineux (s) étant délimitée par une ouverture ménagée contre ou sur ou devant l'élément diffuseur.

4. Dispositif selon l'une quelconque des revendications précédentes, l'élément diffuseur (6) étant une feuille de diffusion.

5. Dispositif selon l'une quelconque des revendications précédentes, la caméra (1) étant focalisée sur une longue distance au moyen d'un objectif, de sorte que l'image ou les images réfléchies (i1, i2) du feuillet lumineux (s) sont représentées de manière floue par la caméra (1).

6. Dispositif selon l'une quelconque des revendications précédentes, la source d'éclairage (3) étant disposée dans un boîtier (5) et l'élément diffuseur (6) étant disposé dans un évidement du boîtier.
